(19) Europäisches Patentamt
European Patent Office
Office européen des brevets

(11) Veröffentlichungsnummer: **0 268 559 B1**

(12) **EUROPÄISCHE PATENTSCHRIFT**

(45) Veröffentlichungstag der Patentschrift: **06.05.92**

(51) Int. Cl.5: **C07F 7/18**, C08G 18/80, C09J 175/04, C08G 18/10

(21) Anmeldenummer: **87810658.2**

(22) Anmeldetag: **13.11.87**

(54) **Haftvermittler.**

(30) Priorität: **19.11.86 CH 4618/86**

(43) Veröffentlichungstag der Anmeldung:
**25.05.88 Patentblatt 88/21**

(45) Bekanntmachung des Hinweises auf die Patenterteilung:
**06.05.92 Patentblatt 92/19**

(84) Benannte Vertragsstaaten:
**BE CH DE ES FR GB IT LI NL SE**

(56) Entgegenhaltungen:
**FR-A- 1 484 455**
**FR-A- 1 486 750**

(73) Patentinhaber: **CIBA-GEIGY AG**
**Klybeckstrasse 141**
**CH-4002 Basel(CH)**

(72) Erfinder: **Mülhaupt, Rolf, Dr.**
**Chemin de la Prairie 2**
**CH-1723 Marly(CH)**
Erfinder: **Simon, Hubert, Dr.**
**Rue de Bâle 213**
**F-68100 Mulhouse(FR)**

**EP 0 268 559 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft siliziummodifizierte Isophoronisocyanate, ein Verfahren zu deren Herstellung, deren Verwendung als Haftvermittler, sowie Polyurethane enthaltend solche Verbindungen.

Es ist üblich, Polyurethane als Klebstoffe, Dichtstoffe, Anstrichsoder Isolierstoffe zu verwenden. Isocyanat-endständige Präpolymere können sowohl mit Aminverbindungen oder Hydroxylverbindungen als auch mit Wasser reagieren bzw. gehärtet werden. Die Härtung mit Wasser wird vorzugsweise bei einkomponentigen Systemen genutzt, wobei man sowohl die Luftfeuchtigkeit also auch die Wasserhaut auf den zu verklebenden Substraten als Härter für das Präpolymere verwendet.

Für die Verbesserung der Haftungseigenschaften von Klebschichten auf den Fügeteiloberflächen werden Oberflächenvorbehandlungen durchgeführt, die in Form mechanischer und/oder chemischer Verfahren dazu dienen, die Ausbildung von physikalischen und chemischen zwischenmolekularen Kräften entweder zu ermöglichen oder zu verstärken. In Ergänzung zu diesen Vorbehandlungen, zu denen ebenfalls das Auftragen sog. Primer gehört, sind auch Haftvermittler auf Basis siliziumorganischer Verbindungen (Silane) im Einsatz. Diese Haftvermittler werden entweder auf die Fügeteiloberfläche aufgetragen oder dem Klebstoff zugesetzt; sie sind in der Lage, die Festigkeit von Klebungen und insbesondere deren Alterungsverhalten gegenüber feuchter Atmosphäre zu verbessern. Derartige Haftvermittler sind z.B. seit langem bei der Herstellung flasfaserverstärkter Kunststoffe im Einsatz, um die Adhäsion zwischen Glasfasern und dem entsprechenden Matrixharz (kohärente, durchgehende Phase eines Mehrphasenpolymeren) zu verbessern. Aufgabe der Haftvermittler ist es also, die Wirkung der üblichen chemischen Oberflächenbehandlungen zu ergänzen oder sogar, insbesondere in Kombination mit mechanischen Verfahren, diese gegebenenfalls zu ersetzen.

Auf dem Gebiet des Klebens sind z.B. Silan-Haftvermittler der allgemeinen Formel

$(RO)_3SiCH_2CH_2CH_2X$

im Einsatz. Als R-Substituenten sind $C_1$-$C_4$ Alkylgruppen gebräuchlich. Die reaktionsfähige Endgruppe X kann in Abstimmung zu dem Klebschichtpolymer z.B. eine Amino-, Hydroxy-, Vinyl-, Methacryl-oder Epoxid-Gruppe sein.

Durch die Oberflächenbehandlung der Fügeteile werden Oberflächenzustände erzeugt, die die Voraussetzungen für optimale Haftungseigenschaften der Klebschicten bieten sollen. Aus diesem Grund ist es erforderlich, die Klebung der vorbehandelten Fügeteile entweder direkt anschliessend oder in einem möglichst kurzen zeitlichen Abstand durchzuführen, um eine erneute Desaktivierung der Oberfläche zu vermeiden. Es kann jedoch Situationen geben, in denen die Oberflächenvorbehandlung zweckmässigerweise bei dem Materialhersteller im kontinuierlichen Ablauf der Materialherstellung durchgeführt wird und die Klebung getrennt bei dem Verbraucher oder in anderern Bereichen des Betriebs erfolgt. Dann liegen zwischen Oberflächenbehandlung und Verarbeitung längerer Zeitspannen. In diesen Fällen kann die aktivierte Oberfläche direkt anschliessend an die Oberflächenbehandlung durch einen dünnen organischen Ueberzug, dem sog. Primer, geschützt werden.

Primer bestehen in den meisten Fällen aus verdünnten Lösungen der Klebstoffgrundstoffe, die auch für die nachfolgende Klebung verwendet werden sollen. Sie werden in der Regel im Walz- oder Tachverfahren auf die Fügeteile aufgebracht und bei Temperaturen (bei Primern auf Basis von chemisch reagierenden Klebstoffsystemen) unterhalb der später erforderlichen Aushärtetemperatur des Klebstoffs ausgehärtet. Durch diese Vorgehensweise wird sowohl eine gute Haftung der Primerschicht auf der Fügeteiloberfläche erreicht, als auch eine spätere ergänzende Härtung zur Ausbildung einer gemeinsamen Polymerstruktur mit dem aufgebrachten Klebstoff sichergestellt. Primer werden auch verwendet, um einen zusätzlichen Schutz in der Klebfuge vor dem Eindiffundieren von Feuchtigkeit und somit dem Auftreten von Unterwanderungskorrosionen zu bieten. Hiervon wird insbesondere im Flugzeugbau beim Kleben von Aluminiumlegierungen Gebrauch gemacht.

Als Primer haven sich z.B. Aminoalkyl-alkoxysilane bewährt (vgl. Plueddemann et al. "Silane coupling agents", Plenum Press, New York [1982]). Allerdings sind die wirksamsten Aminosilan-Haftvermittler als eingebaute Haftvermittler in feuchtigkeitshärtenden Polyurethanen unmodifiziert nicht zu verwenden, da die Aminogruppen mit Isocyanatgruppen abreagieren. Daher sind in der DE-OS 34 14 877 Ketimine und Aldimine von Aminoalkylsilanen beschrieben worden, welche Polyurethan-Klebstoffen zugesetzt werden können, ohne deren Lagerstabilität zu beeinträchtigen.

In der EP-A-182,924 sind ausserdem isocyanatgruppenhaltige Silane für die Verwendung in Acrylatharzen vorgeschlagen worden.

Die vorliegende Erfindung betrifft Verbindungen der allgemeinen Formel I

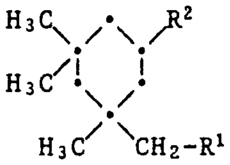

(I),

worin einer der Reste $R^1$ oder $R^2$ $-N=C=O$ bedeutet und der andere $-NHC(O)S(CH_2)_3Si(OR^3)_3$ ist, wobei $R^3$ $C_1$-$C_4$-Alkyl oder Phenyl ist. $R^3$ ist als $C_1$-$C_4$-Alkyl beispielsweise Methyl, Ethyl, n-Propyl, Isopropyl, n-Butyl, sec.Butyl oder t.Butyl

Bevorzugt werden Verbindungen der Formel I, worin $R^2$ $-N=C=O$ ist, und besonders bevorzugt Isomeren-Gemische von Verbindungen der Formel I, worin $R^1$ $-N=C=O$ ist und solchen, worin $R^2$ $-N=C=O$ ist. Die Isomerengemische fallen bei der Herstellung der Verbindungen der Formel I aus Isophorondiisocyanat der Formel II

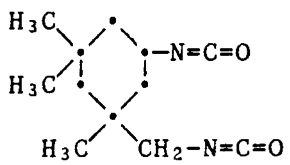

(II)

und einem Mercaptosilan der Formel III

$HS(CH_2)_3Si(OR^3)_3$ (III),

worin $R^3$ die oben angegebene Bedeutung hat, an. Diese Gemische werden vorzugsweise ohne Trennung der Isomeren eingesetzt. Ist eine Trennung erwünscht, so erfolgt diese nach üblichen Methoden der Isomerentrennung.

Die oben beschriebene Reaktion wird vorzugsweise in Gegenwart eines Katalysators durchgeführt. Durch geeignete Wahl des Katalysators kann die Additionsreaktion gesteuert werden, sodass der Angriff des Mercaptosilans der Formel III bevorzugt an der primären oder bevorzugt an der sekundären -NCO-Gruppe erfolgt. Wird beispielsweise 1,4-Diazabicyclo[2.2.2]octan als Katalysator eingesetzt, erweist sich die primäre -NCO-Gruppe als reaktiver, wogegen die Anwesenheit von Dibutylzinndilaurat die Reaktion an der sekundären -NCO-Gruppe fördert, was auch erreicht wird, wenn ohne Katalysator gearbeitet wird. Zur Herstellung wird z.B. auf Ono et al., J. Pol.Sc., Pol.Lett. Ed.23, 509-515 verwiesen.

Vorzugsweise verwendet man als Katalysatoren solche, welche üblicherweise bei der feuchtigkeitshärtenden Polyurethan Herstellung Anwendung finden.

Das bei dieser Reaktion bevorzugte Verhältnis der Verbindungen II:III beträgt 0,5 bis 1,5:1 und insbesondere ungefähr 1:1.

Ein besonderer Vorteil der Verbindungen der Formel I ist die Tatsache, dass sie sich sowohl für feuchtigkeitshärtende (Einkomponenten-) als auch für polyolhärtende (Zweikomponenten-) Polyurethansysteme eignen. In beiden Systemen zeichnen sie sich durch eine markante Verbesserung der Hafteigenschaften auf Glas, Metall, Kunststoffen, wie glasfaserverstärkten Kunststoffen aus. Für den Anwender sind die erfindungsgemässen Verbindungen besonders wertvoll, da sie sich sowohl als Primer als auch als im Polyurethan-Klebstoff eingebaute Haftvermittler einsetzen lassen. Dies ist besonders überraschend, da der Zusatz von monofunktionellem Isocyanat die Polyurethan-Härtung stark beeinträchtigen müsste. Bis zu einer Einsatzmenge von 20 Gew.-%, bezogen auf die Präpolymerkomponente konnte weder eine Störung der Härtung noch Blasenbildung während der Härtung festgestellt werden. Die nichthaftenden Polyurethanpräpolymere und die Verbindungen der Formel I ergeben Systeme, welche sich durch ausgezeichnete mechanische Eigenschaften auszeichnen.

Die Handhabung der Verbindungen der Formel I ist einfach, diese sind flüssig, besitzen eine niedrige Viskosität und zeichnen sich ausserdem durch hohe Lagerrstabilität aus.

Handelt es sich beim Substrat um feuchtigkeitshärtende Polyurethane (Einkomponentenklebstoffe), so enthalten diese als Hauptbestandteil mehrfunktionelle Isocyanate und/oder Polyurethan-Präpolymere. Geeignet sind hier insbesondere aromatische aber auch aliphatische, monocyclische wie polycyclische, mehrfunktionelle Isocyanatverbindungen. So kann nach einer ersten Ausführungsform als aromatische Isocyanatverbindung Toluylendiisocyanat oder Diphenylmethandiisocyanat eingesetzt werden. Besonders geeignet ist technisches Diphenylmethandiisocyanat mit einem Gehalt an höherfunktionellen Diisocyanaten und einer Funktionalität an Isocyanatgruppen grösser als 2. Ein geeignetes Diisocyanat ist Xylylendiisocyanat. Darüber hinaus kann eine Vielzahl aliphatischer Isocyanate der Funktionalität 2 und höher eingesetzt werden. Beispiele sind hier Isophorondiisocyanat und Dicyclohexylmethandiisocyanat als cyclische aliphatische Diisocyanate. Weitere Beispiele sind aliphatische, geradkettige Diisocyanate, wie sie durch Phosgenisierung von Diaminen gewonnen werden, z.B. Tetramethylendiisocyanat oder Hexamethylendiisocyanat.

Nach einer bevorzugten Ausführungsform der Erfindung werden anstatt der mehrfunktionellen Isocyanatverbindungen Polyurethan-Präpolymere eingesetzt. Unter Präpolymeren werden hier die Addukte eines Ueberschusses mehrfunktioneller Isocyanate an mehrfunktionelle Alkohole, etwa die Umsetzungsprodukte eines der vorgenannten aromatischen oder aliphatischen Diisocyanate mit Ethylenglykol, Propylenglykol, Glycerin, Trimethylolpropan oder Pentaerythrit verstanden. Auch Umsetzungsprodukte von Diisocyanaten mit Polyetherpolyolen, z.B. Polyetherpolyolen auf Basis Polyethylenoxid oder auf Basis Polypropylenoxid können als Präpolymere verwendet werden. Bevorzugt sind Polyurethan-Präpolymere auf Basis von Polyetherpolyolen mit Molgewichten zwischen 200 und 10000, insbesondere 500 und 3000.Dem Polyurethan-Fachmann sind eine grosse Anzahl derartiger Polyetherpolyole bekannt; sie werden von zahlreichen Herstellern angeboten und über ihr Molekulargewicht (Zahlenmittel), das aus Endgruppenbestimmungen errechenbar ist, charakterisiert. Weitere geeignete Polyetherpolyole sind Polyetherpolyole auf Basis Polytetrahydrofuran.

Anstelle von Polyetherpolyolen können auch Polyesterpolyole eingesetzt werden. Geeignete Polyesterpolyole sind Umsetzungsprodukte mehrfunktioneller Säuren mit mehrfunktionellen Alkoholen, beispielsweise Polyester auf Basis aliphatischer und/oder aromatischer Dicarbonsäuren und mehrfunktioneller Alkohole der Funktionalität 2-4. So können Polyester aus Adipinsäure, Sebacinsäure, Phthalsäure Hydrophthalsäure und/oder Trimellitsäure einerseits und Ethylenglykol, Propylenglykol, Neopentylglykol, Hexanglykol, Glycerin und/oder Trimethylolpropan andererseits eingesetzt werden. Geeignet sind insbesondere Polyesterpolyole mit Molekulargewicht (Zahlenmittel) zwischen 500 und 5000, insbesondere zwischen 600 und 2000. Weitere geeignete Polyesterpolyole sind die Umsetzungsprodukte von Caprolacton mit Alkoholen der Funktionalität von 2-4, so beispielsweise das Additionsprodukt von 1-5 Mol Caprolacton an 1 Mol Ethylenglykol, Propylenglykol, Glycerin und/oder Trimethylolpropan.

Eine weitere geeignete Klasse mehrfunktioneller Alkohole sind Polybutadienole. Hierbei handelt es sich um Oligomere auf Basis Butadien, die also Endgruppen OH-Gruppen aufweisen. Geeignet sind hier Produkte im Molekulargewichtsbereich 200-4000, insbesondere 500-3000.

Bei der Herstellung der Polyurethan-Präpolymeren ist das Verhältnis von OH-Gruppen der Alkoholkomponente zu Isocyanatgruppen von Bedeutung. Dieses liegt im allgemeinen zwischen 1:2 und 1:10. Dabei werden mit höheren Isocyanatüberschüssen eher niedrigviskose Polyurethan-Präpolymere erhalten, während niedere Isocyanatüberschüsse hochviskose, meist nur noch spachtelbare Zubereitungen liefern.

Es ist dem Polyurethan-Fachmann bekannt, dass die Vernetzungsdichte und damit Härte und Sprödigkeit der Polyurethane mit der Funktionnalität der Isocanatkomponente oder auch des Polyols zunimmt. Es sei hier auf die allgemeine Fachliteratur verwiesen, z.B. auf die Monographie von Saunders und Frisch "Polyurethanes, Chemistry and Technology", Band XVI der Serie High Polymers "Interscience Publishers" New York-London, Teil I (1962) und Teil II (1964).

Aus beispielsweise der gleichen Quelle ist dem Fachmann bekannt, dass er bei polyolhärtenden Zweikomponentenklebstoffen die gleichen, oben für die Herstellung der Präpolymeren beschriebenen Polyole verwenden kann. Dabei muss lediglich das Verhältnis von OH-Gruppen der Alkoholkomponente zu Isocyanatgruppen zugunsten der Alkoholkomponente verschoben werden. Wird überhaupt ein Ueberschuss an Isocyanatgruppen eingesetzt, so sollte dieser 2 % der Theorie nicht überschreiten.

In Zweikomponentensystemen befindet sich das Silan der Formel I vorzugsweise in der Isocyanatkomponente.

Die erfindungsgemässen Polyurethanzubereitungen können weiterhin verschiedene Hilfsstoffe enthalten. Verwendet werden können hier z.B. Füllstoffe. Als Füllstoffe geeignet sind gegenüber Isocyanaten nichtreaktive, anorganische Verbindungen wie z.B. Kreide oder Kalkmehl, gefällte und/oder pyrogene Kieselsäuren, Zeolithe, Bentonite, gemahlene Mineralien sowie andere dem auf dem Arbeitsgebiet tätigen Fachmann

bekannte anorganische Füllstoffe, insbesondere Faserkurzschitte und anderes. Für manche Anwendungen sind Füllstoffe bevorzugt, die den Zubereitungen Thixotropie verleihen, so beispielsweise quellbare Kunstrostoffe, insbesondere PVC.

Ausser den genannten Verbindungen können die erfindungsgemässen Polyurethanzubereitungen noch weitere Hilfsstoffe, beispielsweise Lösungsmittel enthalten. Geeignet sind Lösungsmittel, die ihrerseits nicht nmit Isocyanatgruppen reagieren, so z.B. halogenierte Kohlenwasserstoffe, Ester, Ketone, aromatische Kohlenwasserstoffe u.a.. Auch Weichmacher, Flammschutzmittel, Verzögerer, Farbstoffe und Alterungsschutzmittel, wie sie in Polyurethan-Klebstoffen und Dichtungsmassen bekannt sind, können mit eingearbeitet werden.

Für manche Anwendung ist es wüschenswert, den erfindungsgemässen Polyurethanzubereitungen Schaumstabilisatoren zuzusetzen. Als Schaumstabilisatoren können sogenannte Silikotenside verwendet werden. Es sind dies Blockcopoloymere, die aus einem Polysiloxanblock und einem oder mehreren Polyoxyethylen- und/oder Polyoxypropylenblöcken aufgebaut sind. Die erfindungsgemässen Polurethanzubereitungen können weiterhin flammhemmende und weichmachende Zusätze enthalten. Gängig sind Phosphor- und/oder Haolgenatome enthaltende Verbindungen, wie Tricresylphosphat, Diphenylcresylphosphat, Tris-2-chlor-ethylphosphat, Tris-2-chlorpropylphosphat und Tris-2,3-dibrompropylphosphat. Zusätzlich können Flammschutzmittel verwendet werden, z.B. Chlorparaffine, Halogenphosphide, Ammoniumphosphat und halogen- und phosphorhaltige Harze. Als weitere Zusätze sind für manche Anwendungen Weichmacher von Bedeutung. Geeignet sind hier beispielsweise Ester der Phthalsäure oder Ester langkettiger Dicarbonsäuren, beispielsweise Sebacinsäure- oder Azelainsäureester. Auch sogenannte Epoxidweichmacher, z.B. epoxydierte Fettsäurederivate können hier eingesetzt werden.

Weitere mögliche Zusätze sind basische Beschleuniger. Diese sollten nicht verwendet werden, wenn Carbonsäureanhydride also Beschleuniger eingesetzt werden. Basische Beschleuniger sind beispielsweise tertiäre Basen wie Bis-(N,N′-dimethylamino)-diethylether, Dimethylamino-cyclohexan, N,N-Dimethyl-benzylamin, N-Methylmorpholin sowie die Umsetzungsprodukte von Dialkyl-($\beta$-hydroxyethyl)-amin mit Monoisocyanaten und Veresterungsprodukte von Dialkyl-($\beta$-hydroxy-ethyl)-amin und Dicarbonsäuren. Ein weiterer wichtiger Beschleuniger ist das 1,4-Diamino-bicyclo-(2.2.2)-octan. Ferner können nicht-basische Substanzen also Beschleuniger verwendet werden. Hier seien Metallverbindungen genannt, beispielsweise Eisenpentacrabonyl, Nickeltetracarbonyl, Eisenacetylacetonat sowie Zinn-(II)-2-ethylhexanoat), Dibutylzinndilaurat oder Molybdänglykolat.

Ueblicherweise werden die Haftvermittler den Klebstoffen lin Mengen von 1-20 Gew.-%, vorzugsweise 5-15 Gew.-%, bezogen auf das isocyanatterminierte Präpolymer bei Einkomponentensystemen, bzw. bezogen auf die Isocyanatkomponente bei Zweikomponentensystemen zugesetzt.

Bei der Anwendung als Primer kann der Haftvermittler der Formel I direkt auf den Träger aufgebracht werden. Dieser ist filmbildend und nach Härtung und Lagerung nicht mehr vom Träger lösbar. Dabei ist bemerkenswert, dass die erfindungsgemässen Verbindungen bereits nach zwei bis fünf Minuten Filme bilden. Es ist jedoch auch möglich und dem Fachmann geläufig, die Haftvermittler zusammen mit einem Bindemittel und gegebenenfalls einem Verdünner zu verwenden. Als Bindemittel kommen insbesondere Polymere mit blockierten -OH Gruppen in Frage, wie Polyester, z.B. Polyacrylate oder Polyvinylbutyrate. Als Verdünner kommen beispielsweise Methylethylketon oder Methylenchlorid zum Einsatz.

Beispiel 1:

Zu einer Mischung aus 222 g (1 Mol) Isophorondiisocyanat und 196 g 3-Mercaptopropyltrimethoxysilan (1 Mol) werden 0,5 ml Dibutylzinndilaurat zugetropft. Es wird 2 Stunden bei 60 ° C und schliesslich 24 Stunden bei 100 ° C gerührt. Es wird eine Flüssigkeit mit den folgenden Analysendaten erhalten:

Isocyanatgehalt: 9,7 % (ber. 10,0 %)

$n_D^{25} = 1,497$

| Elementaranalyse | gefunden: | berechnet: | für $C_{18}H_{34}N_2O_5SSi$ |
|---|---|---|---|
| % C | 51,67 | 51,64 | |
| % H | 8,28 | 8,19 | |
| % N | 6,74 | 6,69 | |
| % S | 7,71 | 7,66 | |

IR (Film auf KBr): 3300 $cm^{-1}$, 2950 $cm^{-1}$, 2830 $cm^{-1}$, 2280 $cm^{-1}$, 1630 $cm^{-1}$, 1515 $cm^{-1}$, 1483 $cm^{-1}$, 1200 $cm^{-1}$, 1095 $cm^{-1}$, 850 $cm^{-1}$,

$^1$H-NMR(100MHz): 1 ppm(m), 1,75 ppm(m), 3 ppm(m), 3,6 ppm(s).

Beispiel 2: (A) Präpolymersynthese

Zu Methylendiphenyldiisocyanat (Isonate® 125M) werden unter Stickstoff bei 80 °C eine Mischung aus 177 g trockenem Polypropylenglykol mit dem Molekulargewicht 2000 (Desmophen® 1900U), 0,9 g Trimethylolpropan und 0,1 ml Dibutylzinndilaurat zugegeben und zwei Stunden bei 80 °C gerührt. Es bildet sich ein isocyanat-terminiertes Präpolymer mit einem Isocyanatgehalt von 3,7 %. (Präpolymer A)

(B) Verklebung von Stahl auf Glas und Haftung auf Glas

Zu dem Präpolymer A wird der Haftvermittler zugesetzt und dieses feuchtigkeitshärtende Einkomponenten-Polyurethan zum Verkleben von Stahlprüfkörpern (17 x 2,5 cm), die eine Ueberlappung von 1,25 x 2,5 cm aufweisen und dazwischen als Sandwich einen Glasobjektträger (3,8 x 2,5 cm) enthalten, eingesetzt. Ausserdem wird der Klebstoff auf eine Glasplatte in einer 0,3 cm Schicht aufgetragen und nach zwei Wochen Härtung vier Wochen im Wasser gelagert. Die Versuche bei denen das gehärtete Polyurethan nach der Wasserlagerung manuell nicht vom Glas abzutrennen war, sind mit (+) bezeichnet, während leichtes Abziehen durch (-) angezeigt wird.

| Silan gemäss Bsp.1 (% bezügl.Präpolymer A) | Stahl/Glas Zugscherfestigkeit ($N/mm^2$) | Bruchtyp* | SMC/SMC** Zugscherfestigkeit ($N/mm^2$) | Glashaftung |
|---|---|---|---|---|
| - | 0,64 | A | 3,6 | - |
| 13 | 0,57 | M | 5,0 | + |
| 11 | 0,76 | M | 4,4 | + |
| 3 | 1,20 | K | 3,6 | + |

*) A: Adhäsions-, K: Kohäsions-, M: Glasbruch

**) Glasverstärkter Polyester

Beispiel 3:

Zu Methylendiphenyldiisocyanat (Isonate® 125M) werden unter Stickstoff bei 80 °C eine Mischung aus trockenem Polypropylenglykol des Molekulargewichts 2000 (Desmophen® 1900U), 0,9 g Trimethylolpropan, 60 g Russ, 5 g Cab-O-Sil® (pyrogene Kieselsäure) und 0,2 ml Dibutylzinndilaurat zugegeben und zwei Stunden bei 80 °C gerührt bis ein Isocyanatgehalt von 2,9 % erreicht ist. Nach Zugabe von 34 g Silan gemäss Beispiel 1 werden verschiedene Prüfkörper wie in Beispiel 2 beschrieben verklebt.

| Substrat | Bruchtyp | Zugscherfestigkeit ($N/mm^2$) |
|---|---|---|
| SMC/SMC | K | 8,2 |
| Stahl/Glas/Stahl | K | 0,9* |
| Aluminium/Aluminium | K | 2,8 |

*) Prüfkörper wurden nach zwei Wochen Härtung eine Woche in Wasser bei Raumtemperatur gelagert.

Beispiel 4:

Zu 33,6 g Hexamethylendiisocyanat werden unter Stickstoff bei 120 °C eine Mischung aus 177 g trockenem Polypropylenglykol MW 2000 (Desmophen® 1900U), 0,9 ml Trimethylolpropan und 0,3 ml Dibutylzinndilaurat gegeben und zwei Stunden gerührt bis ein Isocyanat von 2,7 % erreicht ist. Dann werden 14 g des Haftvermittlers gemäss Beispiel 1 zugefügt und die verschiedenen Substrate verklebt:

| Substrat | Zugscherfestigkeit ($N/mm^2$) |
|---|---|
| SMC/SMC | 1,9 |
| Stahl/Glas/Stahl | 0,42 (Glasbruch) |

Beispiel 5:

(Glasprimer) In 200 g Methylenchlorid (getrocknet über neutralem Aluminiumoxid) werden 10 g Polyvinylbutyral (Mowital B70H der Firma Hoechst) gelöst und mit 15 g des Haftvermittlers gemäss Beispiel 1 versetzt. Mit einem Pinsel oder einem Ziehrahmen kann diese Lösung auf Glas aufgebracht werden wobei sich innerhalb einer Minute ein Film ausbildet, der nach drei Tagen Lagerung bei Raumtemperatur sich bei anschliessender Lagerung in Wasser nicht mehr ablöst.

Beispiel 6: Haftung auf verschiedenen Substraten)

Innerhalb einer Stunde bei 70 °C werden 77,7 g trockenes Polypropylenglykol (MW 2000, Desmophen® 1900U) zu 21,9 g Methylen-diphenyldiisocyanat, das 0,04 ml Dibutylzinndilaurat enthält, gegeben. Nach Zusatz von 0,39 g Trimethylolpropan wird eine weitere Stunde bei 70 °C gerührt und es wird ein isocyanat-terminiertes Polyurethanpräpolymer mit 3,7 % freiem Isocyanat erhalten. Zu diesem feuchtigkeitshärtenden Präpolymer wird der Haftvermittler gemäss Beispiel 1 zugefügt und der so modifizierte Klebstoff auf verschiedene Substrate aufgetragen. Die Ansätze sind in der folgenden Tabelle zusammengestellt, wobei + anzeigt, dass manuell eine Ablösung der gehärteten Polyurethanschicht vom Substrat nicht möglich war, was als qualitativer Hinweis auf die Haftvermittlung genommen wurde.

| Silan gemäss Bsp.1 (% bezügl. Präpolymer) | ABS | PA | PC | PP | PVC | Stahl | G |
|---|---|---|---|---|---|---|---|
| - | - | - | + | - | - | - | - |
| 5 | + | + | + | - | + | + | + |
| 15 | + | + | + | - | + | + | + |

ABS: Acrylnitril-Butadien-Styrol
PA: Polyamid
PC: Polycarbonat
PP: Polypropylen
PVC: Polyvinylchlorid
G: Glas

Beispiel 7: (2-Komponenten-PUR Klebstoff)

(A) Polyolkomponente
50 g hydroxylterminiertes Polybutadien (Poly BD® R45 HT) werden mit 5 g 2-Ethyl-1,3-hexandiol, 43 g Füllstoff (Sillithin® Z86) und 2 g Cab-O-Sil® gemischt und eine Stunde bei 80°C am Vakuum getrocknet.
(B) Verklebungen von Polycarbonat und Glas (2,0 mm Klebfuge). Verschiedene Mischungen bestehend aus Polyol (A), ein flüssiges 4,4`-Diisocyanatodiphenylmethan (Isonate® 143 L) und Haftvermittler (gemäss Beispiel 1) wurden geprüft nach 30 Minuten Aushärtung bei 80°C:

| Polyol (g) | Isocyanat (g) | Haftvermittler (g) | Zugscherfestigkeit ($N/mm^2$) | Dehnung am Bruch (mm) | Bruchtyp |
|---|---|---|---|---|---|
| 5 | 0,75 | - | 2,2 | 4,0 | Ad |
| 5 | 0,85 | - | 2,2 | 3,7 | Ad |
| 5 | 0,70 | 0,2 | 2,6 | 5,8 | K, MB |
| 5 | 0,70 | 0,3 | 2,8 | 6,8 | K, MB |

Ad = Adhäsionsbruch
K = Kohäsionsbruch
MB = Materialbruch

## Patentansprüche

**1.** Verbindungen der Formel (I)

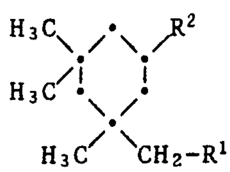

(I),

worin einer der Reste $R^1$ oder $R^2$ $-N=C=O$ bedeutet und der andere $-NHC(O)S(CH_2)_3Si(OR^3)_3$ ist, wobei $R^3$ $C_1$-$C_4$-Alkyl oder Phenyl ist.

2. Verfahren zur Herstellung von Verbindungen der Formel (I) gemäss Anspruch 1, dadurch gekennzeichnet, dass man Isophorondiisocyanat der Formel (II)

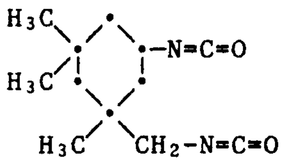

(II)

und einem Mercaptosilan der Formel III

$HS(CH_2)_3Si(OR^3)_3$ (III) ,

umsetzt, wobei das Verhältnis II:III 0,5 bis 1,5:1 beträgt.

3. Verwendung der Verbindungen der Formel (I) gemäss Anspruch 1 als Haftvermittler.

4. Verwendung gemäss Anspruch 3 als Primer.

5. Polyurethankleber enthaltend eine Verbindung der Formel (I) gemäss Anspruch 1.

6. Feuchtigkeitshärtender (Einkomponenten)-Kleber gemäss Anspruch 5.

7. Zweikomponentenkleber gemäss Anspruch 5.

8. Zweikomponentenkleber gemäss Anspruch 7, wobei die Verbindung der Formel (I) in der Isocyanat-Komponente enthalten ist.

## Claims

1. A compound of formula (I)

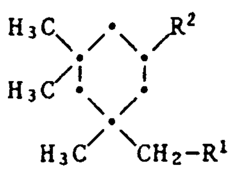

(I),

wherein one of the radicals $R^1$ or $R^2$ is -N-C-O and the other is $-NHC(O)S(CH_2)_3Si(OR^3)_3$, where $R^3$ is $C_1$-$C_4$ alkyl or phenyl.

2. A process for the preparation of a compound of formula (I) according to claim 1, which comprises reacting isophorone diisocyanate of formula (II)

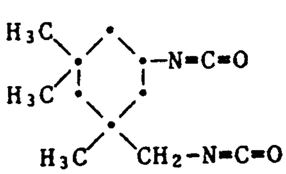

(II)

with a mercaptosilane of formula III

$HS(CH_2)_3Si(OR^3)_3$ (III) ,

where the ratio II:III is from 0.5 to 1.5:1.

3. The use of a compound of formula (I) according to claim 1 as an adhesion promoter.

4. The use according to claim 3 as a primer.

5. A polyurethane adhesive containing a compound of formula (I) according to claim 1.

6. A moisture-curing (single-component) adhesive according to claim 5.

7. A two-component adhesive according to claim 5.

8. A two-component adhesive according to claim 7, where the compound of formula (I) is contained in the isocyanate component.

**Revendications**

1. Composés répondant à la formule I :

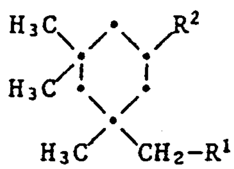

(I)

dans laquelle l'un des symboles $R^1$ et $R^2$ représente un radical -N=C=O et l'autre un radical -NHC(O)-$S(CH_2)_3Si(OR^3)_3$ dans lequel $R^3$ représente un alkyle en $C_1$-$C_4$ ou un phényle.

2. Procédé pour préparer des composés de formule I selon la revendication 1, procédé caractérisé en ce qu'on fait réagir la di-isocyanato-isophorone de formule II :

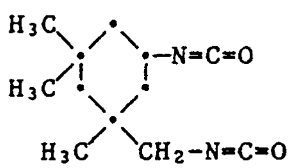

(II)

et un mercapto-silane de formule III :

$HS(CH_2)_3Si(OR^3)_3$ (III)

avec un rapport du composé II au composé III compris entre 0,5:1 et 1,5:1

3. Application des composés de formule I selon la revendication 1 comme adjuvants d'adhérence.

4. Application selon la revendication 3 selon laquelle les composés sont utilisés comme primaires.

5. Colles à base de polyuréthannes qui contiennent un composé de formule I selon la revendication 1.

6. Colles à une seule composante capables de durcir en présence d'humidité, selon la revendication 5.

7. Colles à deux composantes selon la revendication 5.

8. Colle à deux composantes selon la revendication 7 qui contient le composé de formule I dans la composante isocyanate.